# EUROPÄISCHE PATENTSCHRIFT

(11) **EP 3 529 545 B1**
(45) Veröffentlichungstag und Bekanntmachung des Hinweises auf die Patenterteilung: **17.11.2021**
(21) Anmeldenummer: 18701173.9
(22) Anmeldetag: 23.01.2018
(51) Int. Cl.: F25D 23/06

(54) **VERFAHREN ZUR HERSTELLUNG EINES KÜHL- UND/ODER GEFRIERGERÄTES**
METHOD FOR MANUFACTURING A COOLING AND/OR FREEZING APPARATUS
PROCÉDÉ DE FABRICATION D'UN APPAREIL DE REFROIDISSEMENT ET/OU CONGÉLATION

(30) Priorität: 23.01.2017 DE 102017000568; 30.06.2017 DE 102017114659
(43) Veröffentlichungstag der Anmeldung: 28.08.2019
(73) Patentinhaber: Liebherr-Hausgeräte Lienz GmbH, 9900 Lienz (AT)
(72) Erfinder: GRUIDL, Thomas, 9781 Oberdrauburg (AT); WINKLER, Andreas, 9773 Irschen (AT); KÖFELE, Markus, 9961 Hopfgarten (AT)
(74) Vertreter: Herrmann, Uwe
(86) Internationale Anmeldenummer: PCT/EP2018/051592
(87) Internationale Veröffentlichungsnummer: WO 2018/134440

(56) Entgegenhaltungen:
- CN-A- 103 104 046
- DE-A1-102009 002 800
- DE-A1-102010 029 583
- DE-T2- 60 036 572
- DE-T2- 69 502 510
- JP-A- S 608 688
- JP-A- H04 160 298
- JP-A- H09 133 289
- JP-A- 2010 242 875
- US-A- 3 960 631
- US-A1- 2009 179 541
- US-A1- 2013 257 257

## Beschreibung

Die vorliegende Erfindung betrifft ein Verfahren zur Herstellung eines Kühl- und/oder Gefriergerätes mit einem gekühlten Innenraum und mit einer Geräteaußenwand, wobei zwischen dem gekühlten Innenraum um der Geräteaußenwand wenigstens ein Vakuumdämmkörper angeordnet ist, um den Wärmeeintrag von außen in den gekühlten Innenraum zu minimieren.

Aus dem Stand der Technik sind Kühl- bzw. Gefriergeräte bekannt, bei denen sich zwischen der Außenwand des Gerätes und dem Innenbehälter, der den gekühlten Innenraum begrenzt, ein oder mehrere Vakuumdämmkörper befinden. Diese haben die Aufgabe, einen Wärmeeintrag in den gekühlten Innenraum so gering wie möglich zu halten.

Solche Kühl- bzw. Gefriergeräte sind in JPH04160298A und JPS608688A offenbart. Derartige Vakuumdämmkörper sind beispielsweise als Vakuumpaneele oder auch als Vollvakuumdämmkörper bekannt. Vakuumpaneele sind üblicherweise eingeschäumt, so dass der Widerstand gegen den Wärmedurchgang einerseits durch die Ausschäumung und andererseits durch das Vakuumpaneel erzielt wird. Im Fall eines Vollvakuumdämmkörpers befindet sich außer dem Vollvakuumdämmkörper üblicherweise kein weiteres Wärmedämmmaterial zwischen der Außenwand und dem Innenbehälter. Der Vollvakuumdämmkörper besteht beispielsweise aus einer Hochbarrierefolie, in der ein Kernmaterial, wie z.B. Perlit vorhanden ist. Im Inneren des von der Hochbarrierefolie umgebenen Bereichs herrscht Vakuum.

Unter einer Hochbarrierefolie wird vorzugsweise eine Umhüllung bzw. eine Folie verstanden, mittels derer der Gaseintrag in den Vakuumdämmkörper so stark reduziert ist, dass der durch Gaseintrag bedingte Anstieg in der Wärmeleitfähigkeit des Vakuumdämmkörpers über dessen Lebensdauer hinweg ausreichend gering ist. Als Lebensdauer ist beispielsweise ein Zeitraum von 15 Jahren, vorzugsweise von 20 Jahren und besonders bevorzugt von 30 Jahren anzusetzen. Vorzugsweise liegt der durch Gaseintrag bedingte Anstieg in der Wärmeleitfähigkeit des Vakuumdämmkörpers über dessen Lebensdauer bei < 100 % und besonders bevorzugt bei < 50 %. Vorzugsweise ist die flächenspezifische Gasdurchgangsrate der Hochbarrierefolie < 10⁻⁵ mbar * l / s *m² und besonders bevorzugt < 10⁻⁶ mbar * l / s *m² (gemessen nach ASTM D-3985). Diese Gasdurchgangsrate gilt für Stickstoff und Sauerstoff. Für andere Gassorten (insbesondere Wasserdampf) bestehen ebenfalls niedrige Gasdurchgangsraten vorzugweise im Bereich von < 10⁻² mbar * l / s * m² und besonders bevorzugt im Bereich von < 10⁻³ mbar * l / s * m² (gemessen nach ASTM F-1249-90). Vorzugsweise werden durch diese geringen Gasdurchgangsraten die vorgenannten geringen Anstiege der Wärmeleitfähigkeit erreicht.

Unter Hochbarrierefolien werden im Rahmen der vorliegenden Erfindung vorzugsweise Ein- oder Mehrschichtfolien (die vorzugsweise siegelfähig sind) mit einer oder mehreren Barriereschichten (typischerweise metallische Schichten oder Oxid-Schichten, wobei als Metall oder Oxid vorzugsweise Aluminium bzw. ein Aluminiumoxid Verwendung findet) verstanden, die den oben genannten Anforderungen (Anstieg der Wärmeleitfähigkeit und/oder flächenspezifische Gasdurchgangsrate) als Barriere gegen den Gaseintrag genügen.

Bei den oben genannten Werten bzw. bei dem Aufbau der Hochbarrierefolie handelt es sich um exemplarische, bevorzugte Angaben, die die Erfindung nicht beschränken.

Die Anbringung der Vakuumdämmkörper erfolgt zumeist an der inneren oder äußeren Deckschicht, d.h. am Innenbehälter oder an der Außenwand (bzw. an deren Beschichtungen) des Gerätes durch eine Klebeverbindung. Diese wird oftmals manuell, seltener automatisiert ausgeführt.

Der Klebstoff wird bei bekannten Ausführungen direkt vor der Realisierung der Klebeverbindung als flüssig bis pastöser Klebstoff durch Sprühen, Gießen oder Walzen auf einen oder beide Klebepartner aufgebracht, d.h. dosiert und verteilt.

Der vorliegenden Erfindung liegt die Aufgabe zugrunde, ein Verfahren der eingangs genannten Art dahingehend weiterzubilden, die Herstellung des Gerätes effizienter zu gestalten, als dies bei bekannten Geräten der Fall ist.

Diese Aufgabe wird durch ein Verfahren mit den Merkmalen des Anspruchs 1 gelöst.

Danach ist vorgesehen, dass der Vakuumdämmkörper und/oder der Kontaktbereich des Gerätes, mit dem dieser zu verbinden ist (nachfolgend als "die Klebepartner" bezeichnet), mit einem Schmelzklebstoff versehen wird, der Vakuumdämmkörper relativ zu dem Kontaktbereich in die gewünschte Position gebracht wird und dort angelegt wird und sodann der Schmelzklebstoff durch Wärmeeinwirkung aktiviert wird, d.h. seine Klebewirkung entfaltet.

Der Kontaktbereich ist vorzugsweise als Kontaktfläche ausgeführt.

Der vorliegenden Erfindung liegt somit der Gedanke zugrunde, die Klebeverbindung durch Hitzeaktivierung eines bereits auf einem oder beiden der Klebepartner befindlichen Schmelzklebers zu realisieren. Der Schmelzkleber befindet sich somit bereits auf dem oder den Klebepartnern. Er kann beispielsweise als Beschichtung vorliegen. Der Schmelzkleber wird nicht erst unmittelbar vor der Montage des Vakuumdämmkörpers aufgebracht, sondern befindet sich bereits weit vor der Montage auf diesem bzw. auf dem Klebepartner.

Erfindungsgemäß besteht somit ein zeitlicher Versatz zwischen dem Aufbringen der Klebeschicht und deren Aktivierung.

Vorzugsweise erfolgt die Aufbringung des Klebstoffs gleichzeitig mit oder unmittelbar nach der Herstellung des oder der Klebepartner.

Die Aufbringung des Schmelzklebers erfolgt vorzugsweise bereits im Halbzeugstadium, wodurch diese erheblich effizienter erfolgen kann, als am fertigen Kühl- bzw. Gefriergerätebauteil. Dadurch ergibt sich ein erheblicher Kostenvorteil. Der oder die Klebepartner können im "kalten Zustand", d.h. bei nicht aktiviertem Schmelzkleber beliebig lange gelagert werden oder manipuliert werden, ohne dadurch die Qualität der späteren Verbindung wesentlich zu beeinflussen, was einen Logistikvorteil mit sich bringt.

Vorzugsweise sind einer oder beide Klebepartner somit mit dem nicht aktivierten, d.h. noch kalten Schmelzkleber versehen, bevor der Montagevorgang des Vakuumdämmkörpers beginnt.

Bei dem Schmelzklebstoff kann es sich beispielsweise um ein thermoplastisches Material oder um einen hitzeaktivierbaren Reaktivklebstoff handeln.

Denkbar ist beispielsweise der Einsatz eines thermoplastischen Klebstoffs, wie z.B. von Polyethylen und/oder Polypropylen.

Erfindungsgemäß wird der Kontaktbereich durch die Innenseite der Geräte- oder Türaußenwand und/oder durch die Außenseite eines Innenbehälters oder der Türinnenwand gebildet. Der Kontaktbereich, an dem der Vakuumdämmkörper verklebt wird, kann somit die Innenseite der Geräteaußenwand oder die Innenseite der Außenwand des Verschlusselementes, insbesondere der Tür sein, mittels derer der gekühlte Innenraum verschließbar ist.

Denkbar ist es auch, dass der Kontaktbereich die Außenseite des Innenbehälters ist, der den gekühlten Innenraum begrenzt und/oder die von dem gekühlten Innenraum abgewandte Seite der Innenwand des Verschlusselementes, insbesondere der Tür. Erfindungsgemäß ist vorgesehen, dass sich bei dem Kontaktbereich um ein Blech handelt und dass der Schmelzkleber direkt im Anschluss an einen Coilcoatingprozess durchgeführt wird. Somit kann der Schmelzkleber beispielsweise als thermoplastische Folie appliziert werden oder als thermisch aktivierbarer Reaktivklebstoff.

Unter einem Coilcoatingprozess ist ein Verfahren zu verstehen, bei dem kontinuierlich eine Metallbandbeschichtung (ein- oder beidseitig) von flachen Stahl- oder Aluminium-Bändern erfolgt. Dabei entsteht ein Verbundwerkstoff aus einem metallischen Trägermaterial und einer organischen Beschichtung.

Alternativ kann erfindungsgemäß vorgesehen sein, dass es sich bei dem Kontaktbereich um eine Kunststofffläche oder um deren Beschichtung handelt und dass ein thermoplastischer Film als Schmelzkleber mit der Kunststofffläche oder mit der Beschichtung coextrudiert wird oder dass eine Kolamination eines thermoplastischen Films als Folie direkt beim oder im Anschluss an den Extrusionsprozess der Kunststofffläche erfolgt.

Das coextrudierte Material kann in der Weiterverarbeitung thermogeformt werden.

In einer bevorzugten Ausgestaltung wird das Verfahren derart ausgeführt, dass von außen nach innen der folgende Schichtaufbau erhalten wird: Blech/PE/Gasbarriere/Perlit/Gasbarriere/PE/HIPS, wobei PE für Polyethylen und HIPS für High Impact Polystyrene, d.h. hochschlagfestes Polystyrol steht.

Erfindungsgemäß ist vorgesehen, dass der Vakuumdämmkörper eine Barrierefolie aufweist, die zur Aufrechterhaltung des Vakuums im Vakuumdämmkörper dient. Der Schmelzklebstoff kann erfindungsgemäß alternativ oder zusätzlich durch Coextrusion bei der Herstellung der Barrierefolie oder als Kolaminat aufgebracht wird.

In einer Ausgestaltung ist es denkbar, dass die Barrierefolie wenigstens teilweise durch die Kontaktfläche gebildet wird. Die Klebepartner können durch die entstandene kompakte und vorzugsweise gasundurchlässige Verbindung neben ihren sonstigen Funktionen als Wandung etc. gleichzeitig autark als eine oder mehrere Barriereschichten fungieren, die die Aufgabe haben, das Vakuum in dem Vakuumdämmkörper möglichst lange aufrechtzuerhalten. Damit lassen sich die erforderlichen Einzelkomponenten im Geräteaufbau reduzieren. Somit kann beispielsweise ein kombinierter Aufbau als Folie und Stahlblech vorliegen, wobei beide die Barriereschicht des Vakuumdämmkörpers bilden.

Die Aktivierung des Schmelzklebstoffs durch Wärmeeintrag erfolgt vorzugsweise durch die Kontaktfläche hindurch. Ist einer der Klebepartner beispielsweise die Außenwand des Gerätes, kann der Wärmeeintrag durch diese Wand hindurch erfolgen.

Vorzugsweise erfolgt der Wärmeeintrag von "außen" durch Kontaktierung des Wandbauteils mit einem beheizten Werkzeug oder mit einer sonstigen Wärmequelle.

Die Aktivierung des Schmelzklebstoffs durch Wärmeeintrag erfolgt nach der finalen Positionierung der Klebepartner relativ zueinander.

Denkbar ist es, dass die Aktivierung des Schmelzklebstoffs durch Wärmeeintrag von einem Werkzeug erfolgt, das beheizt ist.

Dieses kann sowohl als Wärmeüberträger zum Start des Aktivierungsprozesses als auch zur möglicherweise notwendigen Abkühlung der realisierten Klebeverbindung dienen, die ggf. zum Erreichen der notwendigen mechanischen Festigkeit für eine weitere Verarbeitung des Gerätes bzw. der Baugruppe erforderlich ist.

Vorzugsweise übernimmt das Werkzeug zudem die Fixierung der miteinander zu verklebenden Teile und ggf. die Verpressung der Klebepartner miteinander während des Klebeprozesses.

Das Werkzeug kann sowohl als mechanisch stabiles Werkzeug oder als elastische Folie ausgebildet sein, durch die die Wärme hindurch übertragen wird. Ist es als mechanisch stabiles Werkzeug ausgeführt, kann dies beispielsweise durch einen z.B. aus Metall bestehenden Rahmen realisiert werden, der Temperierkanäle oder elektrische Heizelemente aufweist.

Erfindungsgemäß besteht das Werkzeug aus einem stabilisierenden Rahmen und einer innerhalb dieses Rahmens aufgespannten vorzugsweise elastischen Folie, z.B. aus Silikon, die über komplexe Geometrien auch variierender Größe gezogen werden kann.

In diesem Fall kann der Energie- bzw. Wärmeeintrag über eine Strahlung, z.B. mittels eines IR-Strahlers erfolgen.

Die Wärmeeinbringung in den Schmelzklebstoff kann zusätzlich zur direkten Übertragung vom beheizten Werkzeug über Strahlung, induktiv oder durch Ultraschall (Ultraschallschweißen) erfolgen.

Der erforderliche Anpressdruck auf die Klebepartner und ggf. deren Hinterschnitte kann beispielsweise dadurch erreicht werden, dass ein Unterdruck unterhalb der Folie erzeugt wird, so dass diese an die Klebepartner angepresst wird bzw. auf diese eine Presskraft ausübt. Durch diese Ausführung ergeben sich reduzierte Werkzeug kosten.

An dieser Stelle wird darauf hingewiesen, dass die Begriffe "ein" oder "eine" nicht zwingend auf genau eines der fraglichen Elemente hinweisen, wenngleich auch dies eine mögliche Ausgestaltung der Erfindung ist. Die Begriffe können somit auch eine Mehrzahl der fraglichen Elemente kennzeichnen.

Wie ausgeführt, kann die Folie durch Anlegen eines Unterdrucks an die zu verklebenden Teile angepresst werden.

Die vorliegende Erfindung betrifft des Weiteren ein Kühl- und/oder Gefriergerät, das gemäß einem Verfahren nach einem der Ansprüche 1 bis 6 hergestellt wird.

Ein möglicher Schichtaufbau für die Gerätewandung von außen nach innen ist die Abfolge Blech/PE/Gasbarriere/Perlit/Gasbarriere/PE/HIPS. Vorzugsweise handelt es sich bei der Gassbarriere um eine Hochbarrierefolie mit den eingangs genannten Eigenschaften.

Weitere Einzelheiten und Vorteile der Erfindung werden anhand eines im Folgenden beschriebenen und in der Zeichnung dargestellten Ausführungsbeispiels näher erläutert.

Die Figuren zeigen einen exemplarischen Schichtaufbau eines erfindungsgemäß hergestellten Kühl- und/oder Gefriergerätes.

Das Ausführungsbeispiel betrifft einen Kühlschrank, dessen gekühlter Innenraum durch den Innenbehälter sowie durch die Innenwand der Tür begrenzt ist.

Der gekühlte Innenraum befindet sich in einem Gerätekorpus, dessen Seitenwände sowie die obere Wandung aus Blech bestehen. Dies gilt für die Außenseite der Tür entsprechend.

In dem Raum zwischen der Außenseite des Innenbehälters und der Innenseite der Blechaußenwand befinden sich ein oder mehrere Vakuumdämmkörper. Auch zwischen der Innenwand und der Außenwand der Tür können sich ein oder mehrere Vakuumdämmkörper befinden.

Diese Vakuumdämmkörper weisen eine äußere Umhüllung aus einer Hochbarrierefolie sowie ein pulverförmiges Kernmaterial, z.B. aus Perlit auf. In dem von der Hochbarriefolie umgrenzten Bereich herrscht Vakuum.

Mit der Herstellung der Hochbarrierefolie wird eine Schicht koextrudiert, die den durch Hitze zu aktivierenden Schmelzkleber bildet. Anstelle einer Koextrusion ist auch eine Lamination bzw. Kolamination denkbar.

Der Schmelzkleber übt im nicht aktivierten Zustand, d.h. ohne Hitzeeinwirkung keine Klebewirkung aus, so dass das Handling der Vakuumdämmkörper ohne Einschränkungen erfolgen kann.

Zur Montage des Vakuumdämmkörpers zwischen die Innen- und Außenseite der Tür und/oder zwischen den Innenbehälter und die Außenwand des Korpus wird dieser mittels eines Werkzeugs präzise an die Position bewegt, an der er sich im fertigen Gerät befinden soll. Sodann wird der Vakuumdämmkörper mittels des Werkzeuges an der Kontaktfläche, z.B. an der Innenseite der Außenwand des Korpus angepresst und es folgt anschließend ein Wärmeeintrag, so dass der Schmelzkleber aktiviert wird, d.h. seine klebenden Eigenschaften entfaltet.

Während des Klebevorgangs bzw. während des Aushärtens des Klebers hält das Werkzeug die Presskraft aufrecht. Nach einer bestimmten Dauer, wenn der Klebstoff aktiviert ist, wird die Heizeinrichtung des Werkzeugs abgeschaltet.

Das Werkzeug unterstützt sodann den Abkühlvorgang der Klebeverbindung. Ist diese ausreichend vollständig ausgehärtet, wird das Werkzeug abgenommen.

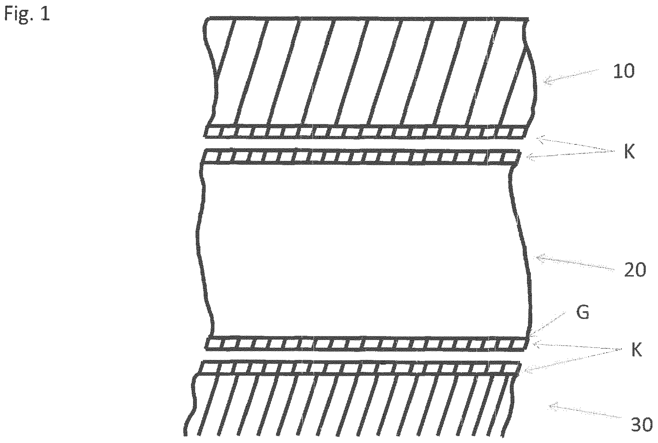

Figur 1 zeigt in einer Schnittdarstellung die Gerätewandung vor dem Zusammenfügen der Schichten des Schmelzklebstoffs.

Das Bezugszeichen 10 kennzeichnet den Innenbehälter des Gerätes aus Kunststoff (Dicke 1200 µm), das Bezugszeichen K jeweils Schichten aus Schmelzklebstoff mit einer Dicke von jeweils 50 µm. Mit dem Bezugszeichen 20 ist ein Vakuumdämmkörper gekennzeichnet (Dicke 5000 µm) und mit dem Bezugszeichen G eine Gasbarriere, vorzugweise in Form einer Folie (Dicke 10 µm). Das Bezugszeichen 30 stellt die Geräteaußenwand aus Blech dar (Dicke 500 µm).

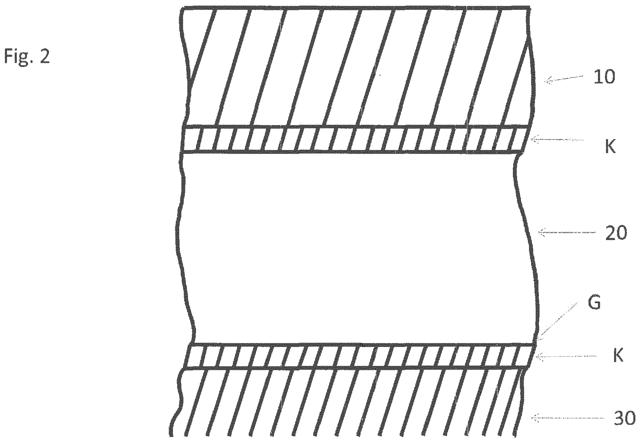

Die in Figur 1 dargestellten Teile werden zusammengefügt, wie dies in Figur 2 gezeigt ist, in der dieselben Bezugszeichen für dieselben Bestandteile verwendet werden wir in Figur 1. Die Klebstoffschichten K sind nun zusammengefügt, so dass sich zwischen dem Innenbehälter und der Vakuumdämmung und zwischen der Vakuumdämmung bzw. der Gasbarriere und dem Blech bzw. Stahl, das die Außenwand des Korpus oder des Verschlusselementes etc. bildet, nur eine Klebstoffschicht K ergibt, die die doppelte Dicke der einzelnen Klebeschichten K, d.h. hier 100 µm aufweist.

Anschließend erfolgt ein Zusammenpressen und der Schmelzkleber wird aktiviert, beispielsweise durch ein geeignetes Werkzeug mit einer Heizeinrichtung. Während des Aushärtens hält dieses oder ein anderes Werkzeug die Presskraft aufrecht. Ist der Klebstoff ausgehärtet, wird die Heizeinrichtung deaktiviert.

Anzumerken ist abschließend, dass die zu Figur 1 und 2 angegebenen Dicken beispielhafte Werte darstellen, die die Erfindung nicht beschränken.

## Patentansprüche

1. Verfahren zur Herstellung eines Kühl- und/oder Gefriergerätes mit einem gekühlten Innenraum und mit einer Geräteaußenwand, wobei zwischen dem gekühlten Innenraum um der Geräteaußenwand wenigstens ein Vakuumdämmkörper angeordnet ist, um den Wärmeeintrag von außen in den gekühlten Innenraum zu minimieren, wobei der Vakuumdämmkörper eine Gasbarriere aufweist, die zur Aufrechterhaltung des Vakuums im Vakuumdämmkörper dient und wobei das Verfahren die folgenden Schritte aufweist:
- Versehen des Vakuumdämmkörpers und/oder ein oder mehrere Kontaktbereiche des Geräts, mit denen der Vakuumdämmkörper zu verbinden ist, mit einem Schmelzklebstoff, wobei die Kontaktbereiche durch die Innenseite der Geräteaußenwand oder der Außenwand einer Tür des Geräts und/oder durch die Außenseite eines Innenbehälters oder einer Innenwand einer Tür des Geräts gebildet werden;
- Bewegen des Vakuumdämmkörpers relativ zu dem Kontaktbereich zum Erreichen einer gewünschten Relativposition und Anlegen des Vakuumdämmkörpers am Kontaktbereich nach Erreichen der gewünschten Relativposition; und
- Aktivieren des Schmelzklebstoffs durch Wärmeeinwirkung, wobei die Aktivierung des Schmelzklebstoffs durch Wärmeeintrag durch den Kontaktbereich erfolgt;
**dadurch gekennzeichnet,**
**dass** es sich bei dem Kontaktbereich um ein Blech oder eine Kunststofffläche handelt, wobei im Falle eines Blechs der Schmelzkleber im Anschluss an einen Coilcoatingprozess aufgebracht wird und wobei im Falle einer Kunststofffläche ein thermoplastischer Film als Schmelzkleber mit der Kunststofffläche coextrudiert wird oder eine Colamination eines thermoplastischen Films als Folie direkt beim oder im Anschluss an den Extrusionsprozess der Kunststofffläche erfolgt, und/oder dass der Schmelzklebstoff durch Coextrusion bei der Herstellung der Gasbarriere oder als Colaminat auf die Gasbarriere aufgebracht wird, wobei die Aktivierung des Schmelzstoffs durch Wärmeeintragung von einem Werkzeug erfolgt, wobei das Werkzeug aus einem stabilisierenden Rahmen und einer innerhalb dieses Rahmens aufgespannten vorzugsweise elastische Folie besteht, durch die die Wärme hindurch übertragen wird und die über komplexe Geometrien gezogen werden kann.

2. Verfahren nach Anspruch 1, **dadurch gekennzeichnet, dass** es sich bei dem Schmelzklebstoff um ein thermoplastisches Material oder um einen hitzeaktivierbaren Klebstoff und vorzugsweise um einen thermoplastischen Klebstoff, wie Polyethylen und/oder Polypropylen handelt.

3. Verfahren nach Anspruch 1 oder 2, **dadurch gekennzeichnet, dass** das coextrudierte Material in der Weiterverarbeitung thermogeformt wird.

4. Verfahren nach einem der vorherigen Ansprüche, **dadurch gekennzeichnet, dass** die Abkühlung der Klebeverbindung und/oder die Fixierung der miteinander zu verklebenden Teile ebenfalls mittels des Werkzeugs erfolgt.

5. Verfahren nach einem der vorherigen Ansprüche, **dadurch gekennzeichnet, dass** die Folie durch Anlegen eines Unterdrucks an die zu verklebenden Teile angepresst wird.

6. Verfahren nach einem der vorhergehenden Ansprüche, **dadurch gekennzeichnet, dass** die Wärmeeinbringung über Strahlung, induktiv oder durch Ultraschall erfolgt.

## Claims

1. Method of manufacturing a refrigerator unit and/or freezer unit having a refrigerated inner space and having an outer unit wall, wherein at least one vacuum insulation body is arranged between the refrigerated inner space and the outer unit wall to minimize the heat input from outside into the refrigerated inner space, wherein the vacuum insulation body comprises a glass barrier, which serves to maintain the vacuum in the vacuum insulation body and wherein the method comprises the following steps:
- providing the vacuum insulation body and/or one or multiple contact regions of the apparatus, to which the vacuum insulation body is to be connected, with a hot melt adhesive, wherein the contact regions are formed by the inner side of the outer unit wall or outer wall of a door of the unit and/or by the outer side of an inner container or of the inner door wall of the unit;
- moving the vacuum insulation body relatively to the contact region in order to reach a desired relative position and applying the vacuum insulation body on the contact region after having reached the desired relative position; and
- activation of the hot melt adhesive by heat application, wherein the activation of the hot melt adhesive is effected by heat input through the contact region;
**characterized in that**
the contact region is a metal sheet or a plastic surface, wherein in the case of the metal sheet, the hot melt adhesive is applied subsequent to a coil coating process, and wherein in case of a plastic surface, a thermoplastic film is coextruded with the plastic surface as a hot melt adhesive or a colamination of a thermoplastic film as a sheet takes place directly in or subsequent to the extrusion process of the plastic surface, and/or that the hot melt adhesive is applied by coextrusion on the manufacture of the gas barrier or as a colaminate, wherein the activation of the hot melt adhesive takes place by heat input from a tool, wherein the tool consists of a stabilizing frame and a preferably elastic film spanned within said frame, through which the heat is transmitted, and which can be pulled over complex geometries.

2. Method in accordance with claim 1, **characterized in that** the hot melt adhesive is a thermoplastic material or a heat-actuable adhesive and is preferably a thermoplastic adhesive such as polyethylene and/or polypropylene.

3. Method in accordance with claim 1 or 2, **characterized in that** the coextruded material is thermoformed in the further processing.

4. Method in accordance with one of the preceding claims, **characterized in that** the cooling of the adhesive connection and/or the fixing of the parts to be adhesively bonded to one another likewise take(s) place by means of the tool.

5. Method in accordance with one of the preceding claims, **characterized in that** the sheet is pressed on to the parts to be adhesively bonded by applying a vacuum.

6. Method in accordance with one of the preceding claims, **characterized in that** the heat introduction takes place via radiation, inductively, or by ultrasound.

## Revendications

1. Procédé de fabrication d'un appareil de refroidissement et/ou congélation, comprenant un espace intérieur réfrigéré et une paroi extérieure d'appareil, au moins un corps d'isolation sous vide étant disposé entre l'espace intérieur réfrigéré et la paroi extérieure d'appareil pour minimiser l'apport de chaleur de l'extérieur vers l'espace intérieur réfrigéré, le corps d'isolation sous vide comportant une barrière aux gaz qui sert à maintenir le vide dans le corps d'isolation sous vide et le procédé comprenant les étapes suivantes de :
- pourvoir le corps d'isolation sous vide et/ou une ou de plusieurs zones de contact de l'appareil, auxquelles le corps d'isolation sous vide est à relier, d'un adhésif thermofusible, les zones de contact étant formées par le côté intérieur de la paroi extérieure d'appareil ou de la paroi extérieure d'une porte de l'appareil et/ou par le côté extérieur d'un contenant intérieur ou d'une paroi intérieure d'une porte de l'appareil ;
- déplacer le corps d'isolation sous vide par rapport à la zone de contact pour obtenir une position relative souhaitée et appliquer le corps d'isolation sous vide sur la zone de contact une fois la position relative souhaitée atteinte ; et
- activer l'adhésif thermofusible par action de la chaleur, l'activation de l'adhésif thermofusible étant effectuée par apport de chaleur par la zone de contact ;
**caractérisé en ce que**
la zone de contact est une tôle ou une surface en matière plastique, la colle thermofusible étant appliquée, dans le cas d'une tôle, après un processus de prélaquage et, dans le cas d'une surface en matière plastique, un film thermoplastique étant coextrudé avec la surface en matière plastique en guise de colle thermofusible ou un colaminage d'un film thermoplastique sous forme de feuille étant effectué directement lors du processus d'extrusion de la surface en matière plastique ou directement après celui-ci, et/ou **en ce que** l'adhésif thermofusible est appliqué par coextrusion lors de la fabrication de la barrière aux gaz ou sous la forme de colaminat sur la barrière aux gaz,
l'activation du colle thermofusible étant effectuée par apport de chaleur depuis un outil, l'outil consistant en un cadre stabilisateur et d'une feuille de préférence élastique tendue à l'intérieur de ce cadre, à travers laquelle la chaleur est transmise et qui peut être tirée sur des géométries complexes.

2. Procédé selon la revendication 1, **caractérisé en ce que** l'adhésif thermofusible est un matériau thermoplastique ou un adhésif thermoactivable et de préférence un adhésif thermoplastique, tel que le polyéthylène et/ou le polypropylène.

3. Procédé selon la revendication 1 ou 2, **caractérisé en ce que** le matériau coextrudé est thermoformé lors du traitement ultérieur.

4. Procédé selon l'une des revendications précédentes, **caractérisé en ce que** le refroidissement de l'assemblage collé et/ou la fixation des parties à coller ensemble est également effectué au moyen de l'outil.

5. Procédé selon l'une des revendications précédentes, **caractérisé en ce que** la feuille est pressée par l'application d'une dépression sur les parties à coller.

6. Procédé selon l'une des revendications précédentes, **caractérisé en ce que** l'apport de chaleur est effectué par rayonnement, par induction ou par ultrason.
